# EUROPÄISCHE PATENTSCHRIFT

(11) **EP 2 666 611 B1**
(45) Veröffentlichungstag und Bekanntmachung des Hinweises auf die Patenterteilung: **21.04.2021**
(21) Anmeldenummer: 13167739.5
(22) Anmeldetag: 14.05.2013
(51) Int. Cl.: B29C 48/86, B29C 48/87, B29C 48/32, B29C 48/92, B29C 48/255, B29C 48/09, B29C 48/10

(54) **Verfahren und Vorrichtung zum Temperieren von plastischer Kunststoffmasse**
Device and method for tempering plastic material
Procédé et dispositif destinés à tempérer une masse en matière plastique

(30) Priorität: 23.05.2012 DE 102012208677
(43) Veröffentlichungstag der Anmeldung: 27.11.2013
(73) Patentinhaber: battenfeld-cincinnati Germany GmbH, 32547 Bad Oeynhausen (DE)
(72) Erfinder: Gesper, Thomas, 33334 Gütersloh (DE)

(56) Entgegenhaltungen:
- EP-A1- 2 397 303
- WO-A1-2012/034146
- WO-A2-2006/050549
- AT-U1- 11 127
- DE-A1- 2 234 876
- DE-A1- 2 345 049
- DE-A1- 2 940 890
- DE-A1-102007 050 291
- ES-A1- 2 279 704
- GB-A- 2 074 349
- JP-A- S5 251 456
- JP-A- S54 154 464
- JP-U- S5 679 317
- US-A- 3 738 420
- US-A- 5 567 369
- US-A1- 2007 033 900

## Beschreibung

Die Erfindung betrifft ein Verfahren zum Temperieren von plastischer Kunststoffmasse in einem Extrusionswerkzeug, insbesondere Rohrextrusionswerkzeug, wobei die Kunststoffmasse über einen oder mehrere Fließkanäle von mindestens einem Schmelzeeingang zu mindestens einem Schmelzeausgang fließt, wobei die Kunststoffmasse zwischen Schmelzeeingang und Schmelzeausgang mindestens ein Temperierelement im Fließkanal umströmt, wobei mittels des Temperierelements die Kunststoffmasse, die das Temperierelement umströmt, temperiert wird, wobei über das Temperierelement der Grad der Temperierung variiert wird, wobei der Grad der Temperierung an allen Stellen im Temperierelement gleich oder unterschiedlich sein kann. Sowie eine diesbezügliche Vorrichtung.

Zur Herstellung von Rohren ist es erforderlich, den von einem Extruder erzeugten zylinderförmigen Kunststoffschmelzestrom mit Hilfe eines nachfolgenden Werkzeuges in einen kreisringspaltförmigen Schmelzestrom umzuformen. Hierfür ist es wichtig, dass der vom Extruder kommende Schmelzestrom im Werkzeug durch einen zentrisch angeordneten Dorn in die entsprechende Ringströmung überführt wird. Eine derartige Vorrichtung wird in der DE 103 15 906 vorgeschlagen.

Heute werden oft kurze Extrusionslinien gefordert. Dies kann nur erreicht werden, wenn die Kühlung der extrudierten Profile optimiert wird.

Bestenfalls wird die Schmelze bereits im Werkzeug soweit herunter gekühlt, dass sie zwar noch verformbar ist, aber die Schmelzetemperatur deutlich niedriger ist, als nach dem Verlassen des Extruders.

Die DE 10 2007 050 291 schlägt hier eine Aufteilung der Schmelze im Werkzeug vor, die Einzelstränge werden gekühlt und anschließend wieder zusammengeführt.

Auch aus der DE2940890A1 ist ein Verfahren zum Temperieren von plastischen Massen bekannt. Hier wird vorgeschlagen, den Durchfluss im Fließkanal mittels eines Ventils zu verändern.

Ein derartiges Werkzeug ist jedoch verfahrenstechnisch schwierig zu betreiben, da das Fließverhalten der gekühlten Einzelstränge aufeinander abgestimmt werden muss.

Im Stand der Technik werden auch noch ähnliche Schmelzekühlungen vorgeschlagen. So zeigen die US 2007/033900A, die WO 2006/050549 A2, die WO 2012/034146 A1, die DE 102007050291 A1, die DE2940890 A1, die ES2279704 A1 und die

EP2397303A1 alle Kühlvorrichtungen im Werkzeug die die Schmelze umströmen muss und somit bereits in der Schmelzetemperatur verändert werden.

**Aufgabe** der Erfindung ist es daher, ein Verfahren bzw. eine Vorrichtung bereitzustellen, bei dem/der der Schmelze, aus dem Extruder kommend, gezielt Energie entzogen wird.

Die **Lösung** der Aufgabe ist in Verbindung mit dem Oberbegriff des Anspruchs 1 dadurch gekennzeichnet, dass das Temperierelement ein oder mehrere Durchbrüche aufweist die von einem Fluid durchströmt werden, und dass der Durchfluss des Fluids in einem oder mehreren der Durchbrüche verändert wird wobei über die Maschinensteuerung der Extruderanlage die Mittel, die als Sperrelemente in Form von kleinen Schiebern ausgebildet sind, in den Querschnitt der Durchbrüche ein- oder ausgefahren werden.

Durch diese Vorgehensweise wird erreicht, dass gezielt an unterschiedlichen Stellen im Werkzeug, bevorzugt an unterschiedlichen Stellen um den Umfang des Werkzeuges, die Schmelze temperiert werden kann. Es kann somit nicht, was normalerweise der Fall sein wird, der Schmelze Wärme entzogen, sondern auch bei Bedarf an den gewünschten Stellen Wärme zugeführt werden. Das Temperierelement kann verschiedentlich aufgebaut sein. Es kann aus einzelnen Stäben bestehen die zu einem Block zusammengefasst werden, wobei jeder der Stäbe einzeln temperiert werden kann. Dies kann sowohl direkt, z.B. durch elektrische Leitungen, aber auch indirekt - bei geeigneter Materialwahl der Stäbe - z.B. durch Induktion erfolgen.

Weiterbildungsgemäß ist jedoch vorgesehen das Temperierelement ähnlich eines Siebkorbes zu gestalten und mit einem oder mehreren Durchbrüche zu versehen über die die Kunststoffmasse gezielt temperiert wird.

Dies kann zum Beispiel erforderlich sein, wenn das Fließverhalten an dieser Stelle im Werkzeug unbefriedigend ist. Diese Temperierung kann über eine Vielzahl von Anpassungen einzelner oder mehrerer Parameter erfolgen.

So ist fortbildungsgemäß vorgesehen die Temperatur des Fluids zu verändern und damit die Temperierung zu beeinflussen, denn durch die Veränderung der Fluidtemperatur wird das Temperaturdelta zwischen Temperiermedium und der Schmelze verändert.

Es kann aber auch der Druck des Fluids verändert werden, wodurch sich das Fließ- und Strömungsverhalten des Fluids ändert und damit auch der Einfluss der Temperierung auf die Schmelze. Denn wenn das Fluid schneller durch die Durchbrüche gefördert wird, wird auch der Temperaturübergang von Schmelze zum Fluid beschleunigt, da immer wieder "frisches" Kühlmedium die Schmelze temperieren kann.

Bekanntlich ist der Temperaturübergang zu einem Medium unterschiedlich wenn diese Fest, flüssig oder gasförmig ist, deshalb wird in einer weiteren Fortbildung vorgeschlagen den Aggregatzustand des Fluids zu ändern.

Wie bereits weiter oben beschrieben, hat die Geschwindigkeit des Fluids einen Einfluss auf die Stärke der Temperierung. Weiterbildungsgemäß wird daher vorgeschlagen den Durchfluss des Fluids in einem oder mehreren der Durchbrücke zu verändern. Dies kann nicht nur durch den Druck des Fluids selbst erreicht werden, sondern auch durch Engstellen oder Erweiterungen in den Durchbrüchen, wodurch der Querschnitt des Durchbruchs verändert wird.

Durch all diese Verfahrensschritte wird erreicht, dass zwischen Schmelzeeingang und Schmelzeausgang mindestens ein Temperierelement im Fließkanal angeordnet ist das von der Kunststoffmasse umströmt wird und im Temperierelement über die dort angeordneten Durchbrüche mittels des Fluids gezielt Einfluss auf die Temperatur der Schmelze genommen wird.. Durch diese Lösung wird der Kernströmung und somit der gesamten Kunststoffmasse effektiv temperiert, vorzugsweise Wärme entzogen. Das Temperierelement kann direkt im Fließkanal eingebunden sein oder in diesen eingeschwenkt oder anderweitig, je nach Anforderung, eingebracht oder durchgeführt werden.

Im Fließkanal kann zusätzlich ein Zwangsverteilelement angeordnet sein wodurch eine weitere Homogenisierung der Schmelze erreicht wird. Gegebenenfalls ist das Zwangsverteilelement gleichzeitig das Temperierelement oder das Temperierelement ist im oder am Zwangsverteilelement angeordnet.

Die Durchbrüche im Temperierelement sind als Wärmeträgerleitung ausgelegt durch die das Fluid, dies kann Wasser, ein Wärmeöl oder jegliches Fluid sein, dass zur Temperierung geeignet ist. Als Wärmeträgermedium kommen aber auch z.B. Luft, gasförmige Medien, Öle, fluide Medien, Metalle oder feste Medien zum Einsatz. Darüber hinaus können Systeme wie beispielsweise die Heatpipe als Wärmeträgerleitung genutzt werden.

Da die Schmelze das Temperierelement umströmt, wird Energie an dieses übertragen oder diesem entzogen. Diese Energie wird wiederum durch die Wärmeträgerleitung aus dem System abgeführt oder bei Bedarf zugeführt.

Am praktischsten ist es wenn das Zwangsverteilelement ein Siebkorb, eine Siebplatte oder eine Filterplatte ist. Das Zwangsverteilelement kann zum Energietransport oder zu Reinigungszwecken sowohl axial als auch radial verschoben werden oder durch den Fließkanal durchgeführt werden.

Zur Steigerung der Vorkühlung kann auch das Vorverteilelement, durch Einbringung von Temperierelementen in das Vorverteilelement, temperiert werden.

Die **Lösung** für die Vorrichtung ist in Verbindung mit dem Oberbegriff des Anspruches 5, dadurch gekennzeichnet, dass das Temperierelement ein oder mehrere Durchbrüche aufweist durch die ein Kühlmedium förderbar ist, der Querschnitt der Durchbrüche im Temperierelement durch die Maschinensteuerung der Anlage über Mittel veränderbar ist, wobei die Mittel zum Verändern des Querschnitts in den Durchbrüchen als Sperrelemente in Form von kleinen Schiebern ausgebildet sind, die in den Querschnitt der Durchbrüche ein- oder ausfahrbar sind.

Wie bereits weiter oben beschrieben, kann das Temperierelement aus einzelnen Stäben bestehen die zu einem Block zusammengefasst werden.

Fortbildungsgemäß ist jedoch zunächst vorgesehen das Temperierelement wie einen Siebkorb aufzubauen, wobei dann das Temperierelement ein oder mehrere Durchbrüche aufweist durch die ein Kühlmedium förderbar ist.

Die Durchbrüche im Temperierelement sind eine Vielzahl von Bohrungen/Rohre die mit Wärmeträgerleitungen in Verbindung stehen.

Mit Bohrungen sind nicht ausschließlich runde Querschnitte gemeint, sondern ebenso eckige oder ovale oder sonst wie strömungsgünstig geformte Querschnitte. Durch diese Ausführung wird die Schmelze nun an einer Vielzahl von temperierten Bereichen vorbei geführt, wodurch die Kontaktoberfläche zwischen Schmelze und Temperierelement erhöht wird. Hierdurch wird die Schmelze noch effektiver temperiert.

Es wird also die Kunststoffmasse zwischen Schmelzeeingang und Schmelzeausgang mindestens ein Temperierelement im Fließkanal umströmt. Es wird hiermit erreicht, dass die Kunststoffmasse bereits im Fließkanal gekühlte Bereiche umströmen muss wodurch die Kunststoffmasse über den kompletten Strömungsquerschnitt gleichmäßig gekühlt wird. Hierdurch wird der schlechten Wärmeleitung der Kunststoffmassen entgegen gewirkt.

Das Temperierelement kann mit dem Wärmeträgermedium von außerhalb der Extrusionslinie gespeist werden oder das Wärmeträgermedium wird bereits durch die Extrusionslinie geführt und/oder bereits zur Kühlung des Produktes und/oder Teilen der Extrusionslinie genutzt worden sein.

In einer weiteren Fortbildung wird vorgeschlagen den oder die Durchbrüche im Temperierelement mit einem flexiblen Rohr auszukleiden dessen Querschnitt von außen veränderbar ist. Es ist hier zum Beispiel vorstellbar, diesen flexiblen Teil des Rohres, ähnlich wie bei einem Schlauch mit einer Schlauchklemme zu verengen.

Durch diese Maßnahmen kann die Gesamtlänge der Extrusionslinie verkürzt werden, da die Produktinnenseiten aktiv gekühlt werden und zusätzlich die Schmelze im Werkzeug vorgekühlt wird, wodurch weniger Energie über die äußere Oberfläche des Produktes in der Nachfolge entzogen werden muss.

Durch die gewonnene Kühlleistung kann die Durchsatzleistung der Anlage erhöht werden.

Das Wärmeträgermedium kann beispielsweise bereits durch den Dorn des Werkzeuges geleitet worden sein. Das Werkzeug weist eine Innenkühlung auf deren Strömungsverteilung beeinflussbar ist, wobei im Inneren des Werkzeuges mindestens eine Abzweigung für ein Wärmeträgermedium angeordnet ist. Durch diese Abzweigung die ähnlich eines Bypasses wirkt, wird erreicht, dass das Wärmeträgermedium gezielt beeinflusst werden kann und somit die Menge die durch den Dorn geführt wird gesteuert wird. Anschließend wird das Wärmeträgermedium dem Temperierelement zugeführt.

In den Zeichnungen ist schematisch ein Ausführungsbeispiel der erfindungsgemäßen Vorrichtung gezeigt.
- Fig. 1: zeigt eine Extrusionslinie,
- Fig. 2: zeigt einen Teil des Werkzeugs in einer Schnittdarstellung,
- Fig. 3: einen Schnitt quer durch das Temperierelement und
- Fig. 4: die Figur 3 mit den Sperrelementen.

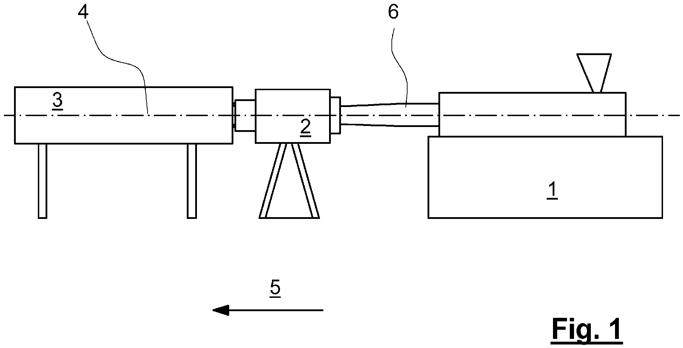

In Figur 1 ist schematisch eine Extrusionslinie dargestellt, wobei der Extruder 1 am Extrusionswerkzeug 2 angeordnet ist. In Extrusionsrichtung 5 betrachtet schließt sich ans Werkzeug 2 die Kalibrierung 3 an. Daran schließen sich weitere Nachfolgeeinrichtung wie Kühlung, Abzug und Trennvorrichtung an (nicht dargestellt). In der beispielhaft dargestellten Extrusionslinie wird ein Kunststoffrohr 6 gefertigt. Die Kalibrierung 3 kann einen Vakuumtank mit eingebauter Kalibrierhülse umfassen. An die Kalibrierung können sich auch noch weitere Kühlbäder anschließen. Die Extrusionsachse ist mit Positionsnummer 4 dargestellt. Extrusionsrichtung ist gleichzeitig Schmelzefließrichtung.

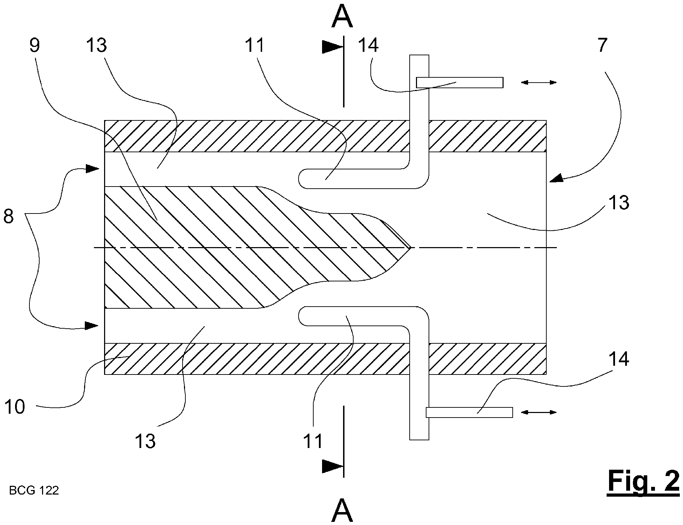

Figur 2 zeigt das Werkzeug in einer Schnittdarstellung, wobei der Schnittverlauf mittig und entlang der Extrusionsachse 5 liegt. Zwischen dem Schmelzeeingang 7 und dem Schmelzeausgang 8 ist schematisch das Temperierelement dargestellt. Die Schmelze gelangt vom Extruder 1 in den Schmelzeleingang 7 und wird über die Fleißkanäle 13 in den Bereich des Wendelverteilers (nicht dargestellt) geführt und mit diesem gleichmäßig radial im Werkzeug 2 verteilt und passiert zwangsweise das Temperierelement 11, bevor sie das Werkzeug 2 über den Schmelzeausgang 8 verlässt. Die nur schematisch dargestellten Rohre des Temperierelementes 11 können über die Sperrelemente 14 im Querschnitt verändert werden und wodurch der Durchfluss und damit die Temperierleistung des Fluids beeinflusst wird. Die dargestellten Doppelpfeile symbolisieren die Verschiebemöglichkeit der Sperrelement 14.

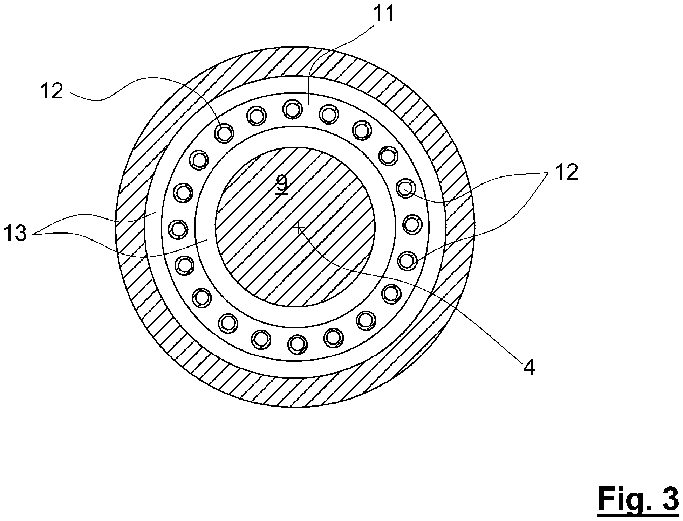

Figur 3 zeigt einen weiteren Schnitt durch das Werkzeug 2, wobei dieser Schnitt quer zur Extrusionsache 4 gemäß der Schnittlinie A-A aus Figur 2 verläuft. Es ist der Dorn 9 mit der Extrusionsachse 4, die hier nur als Punkt zu sehen ist, sowie dem Temperierelement 11 und der Hülse 10 dargestellt. Die Schmelze, die vom Schmelzeeingang 7 zum Schmelzeausgang 8 geführt wird, passiert zwangsweise das Temperierelement 11 und umströmt somit die fluiddurchflossenen Durchbrüche 12, hier als Bohrungen oder Rohre ausgeführt, vom inneren zum äußeren Fließkanal 13.

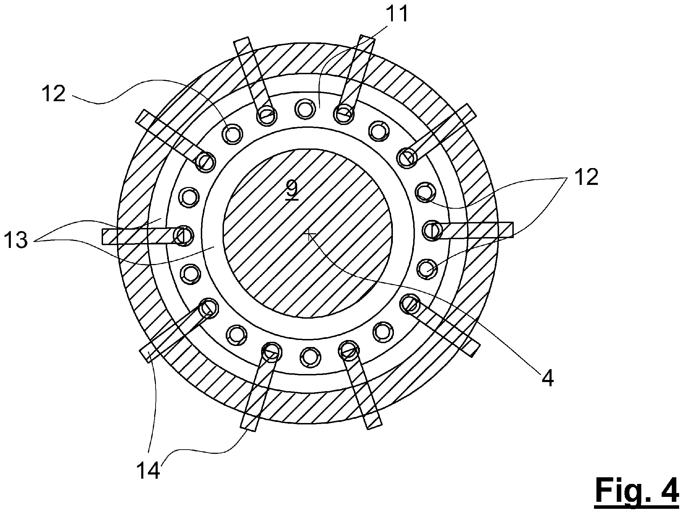

Figur 4 zeigt den Schnitt von Figur 3, wobei in dieser Figur die Sperrelemente 14 zum verändern des Querschnittes der Durchbrüche schematisch ein skizziert sind. Die Sperrelemente 14 sind einzeln ansteuerbar, wodurch jeder Durchbruch 12 unterschiedlich stark im Querschnitt veränderbar ist.

### Bezugszeichenliste:

- 1: Extruder
- 2: Werkzeug
- 3: Kalibrierung
- 4: Extrusionsachse
- 5: Extrusions- und Schmelzefließrichtung
- 6: Kunststoffrohr
- 7: Schmelzeeingang
- 8: Schmelzeausgang
- 9: Dorn
- 10: Hülse
- 11: Temperierelement
- 12: Durchbruch in 11
- 13: Fließkanal
- 14: Sperrelement

## Patentansprüche

1. Verfahren zum Temperieren von plastischer Kunststoffmasse in einem Rohrextrusionswerkzeug (2),
wobei die Kunststoffmasse über einen oder mehrere Fließkanäle (13) von mindestens einem Schmelzeeingang (7) zu mindestens einem Schmelzeausgang (8) fließt,
wobei die Kunststoffmasse zwischen Schmelzeeingang (7) und Schmelzeausgang (8) mindestens ein Temperierelement (11) im Fließkanal (13) umströmt,
wobei mittels des Temperierelements (11) die Kunststoffmasse, die das Temperierelement (11) umströmt, temperiert wird,
wobei über das Temperierelement (11) der Grad der Temperierung variiert wird,
wobei der Grad der Temperierung an allen Stellen im Temperierelement (11) gleich oder unterschiedlich sein kann,
**dadurch gekennzeichnet, dass**
das Temperierelement (11) ein oder mehrere Durchbrüche (12) aufweist die von einem Fluid durchströmt werden,
dass der Durchfluss des Fluids in einem oder mehreren der Durchbrüche (12) durch Veränderung des Querschnittes über Mittel (14) verändert wird,
wobei über die Maschinensteuerung der Extruderanlage die Mittel (14), die als Sperrelemente in Form von kleinen Schiebern ausgebildet sind, in den Querschnitt der Durchbrüche (12) ein- oder ausgefahren werden.

2. Verfahren nach Anspruch 1, **dadurch gekennzeichnet, dass** die Temperatur des Fluids verändert wird.

3. Verfahren nach Anspruch 1 oder 2, **dadurch gekennzeichnet, dass** der Druck des Fluids verändert wird.

4. Verfahren nach einem der Ansprüche 1 bis 3, **dadurch gekennzeichnet, dass** der Aggregatzustand des Fluids geändert wird.

5. Vorrichtung zum Temperieren von plastischer Kunststoffmasse in einem Rohrextrusionswerkzeug (2), umfassend einen oder mehrere Fließkanäle (13) mit mindestens einem Schmelzeeingang (7) und einem Schmelzeausgang (8),
wobei zwischen Schmelzeeingang (7) und Schmelzeausgang (8) mindestens ein Temperierelement (11) im Fließkanal (13) angeordnet ist,
wobei das Temperierelement (11) von der Kunststoffmasse umströmbar ist,
wobei mittels des Temperierelements (11) die Kunststoffmasse, die das Temperierelement (11) umströmt, temperierbar ist, wobei der Grad der Temperierung über das Temperierelement (11) steuer- oder regelbar ist.
**dadurch gekennzeichnet, dass**
das Temperierelement (11) einen oder mehrere Durchbrüche (12) aufweist durch die ein Kühlmedium förderbar ist,
der Querschnitt der Durchbrüche (12) im Temperierelement (11) durch die Maschinensteuerung der Anlage über Mittel (14) veränderbar ist,
wobei die Mittel (14) zum Verändern des Querschnitts in den Durchbrüchen (12) als Sperrelemente in Form von kleinen Schiebern ausgebildet sind, die in den Querschnitt der Durchbrüche (12) ein- oder ausfahrbar sind.

6. Vorrichtung nach Anspruch 5, **dadurch gekennzeichnet, dass** das Temperierelement (11) aus einzelnen Stäben besteht deren Temperatur steuer- oder regelbar ist.

7. Vorrichtung nach Anspruch 5, **dadurch gekennzeichnet, dass** der Durchbruch im Temperierelement (11) mit einem flexiblen Rohr ausgekleidet ist dessen Querschnitt von außen veränderbar ist.

## Claims

1. Process for tempering plastic melt inside a pipe extrusion device (2),
wherein the plastic melt flows via one or several flow channels (13) from at least one melt inlet (7) to at least one melt outlet (8),
the plastic melt flowing around at least one tempering element (11) inside the flow channel (13) between the melt inlet (7) and the melt outlet (8),
the plastic melt which flows around the tempering element (11) being tempered by means of said tempering element (11),
the degree of tempering being varied by means of the tempering element (11), whereby the degree of tempering can be equal or different at all parts of the tempering element (11),
**characterized in that**
the tempering element (11) features one or several openings (12) which are flown through by a fluid,
and that the flow of the fluid is adjusted in one or several of the openings (12) through adjustment of the cross section with the help of means (14),
said means (14), which are designed as blocking elements in the form of small sliders, being driven into or out of the cross section of the openings (12).

2. Process according to claim 1, **characterized in that** the temperature of the fluid is varied.

3. Process according to claim 1 or 2, **characterized in that** the pressure of the fluid is altered.

4. Process according to one of the claims 1 to 3, **characterized in that** the physical state of the fluid is altered.

5. Apparatus for tempering plastic melt inside a pipe extrusion device (2), comprising one or several flow channels (13) with at least one melt inlet (7) and one melt outlet (8),
at least one tempering element (11) being arranged inside the flow channel (13) between the melt inlet (7) and the melt outlet (8),
wherein the tempering element (11) can be flown around by the plastic melt,
the plastic melt which flows around the tempering element (11) being able to be tempered by means of said tempering element (11),
the degree of tempering being able to be controllable or adjustable by means of the tempering element (11),
**characterized in that**
the tempering element (11) features one or several openings (12) through which a cooling medium can be conveyed,
and that the cross section of the openings (12) within the tempering medium (11) is adjustable via the control of the system with the help of means (14),
said means (14) for adjusting the cross section within the openings (12) being designed as blocking elements in the form of small sliders which can be driven into or out of the openings (12).

6. Apparatus according to claim 5, **characterized in that** the tempering element (11) consists of several bars, the temperature of which can be controlled or adjusted.

7. Apparatus according to claim 5, **characterized in that** the opening within the tempering element (11) is lined with a flexible pipe whose cross section can be adjusted from the outside.

## Revendications

1. Procédé d'équilibrage de température d'une masse plastique dans un outil pour l'extrusion de tubes (2),
la masse plastique coulant d'au moins un orifice d'entrée pour la masse fondue (7) vers au moins un orifice de sortie pour la masse fondue (8) via un ou plusieurs canaux d'écoulement (13),
la masse plastique coulant autour d'au moins un élément d'équilibrage de température (11) dans le canal d'écoulement (13),
la masse plastique qui coule autour de l'élément d'équilibrage de température (11) étant tempérée au moyen dudit élément d'équilibrage de température (11),
le dégrée d'équilibrage de température étant adapté au moyen dudit élément d'équilibrage de température (11),
le dégrée d'équilibrage de température pouvant être égal ou différent en tout point de l'élément d'équilibrage de température (11),
**caractérisé en ce que**
l'élément d'équilibrage de température (11) présente un ou plusieurs orifices (12) qui sont parcourus par un fluide et
**que** le débit du fluide est ajusté dans un ou plusieurs des orifices (12) par une modification de la section transversale à l'aide de moyens (14),
lesdits moyens (14), qui sont des éléments de blocage sous forme de petits curseurs, étant entrés ou sortis dans la section transversale des orifices (12) à l'aide de la commande de machines de l'installation d'extrusion.

2. Procédé selon la revendication 1, **caractérisé en ce que** la température du fluide est modifiée.

3. Procédé selon l'une quelconque des revendications 1 ou 2, **caractérisé en ce que** la pression du fluide est modifiée.

4. Procédé selon l'une quelconque des revendications 1 à 3, **caractérisé en ce que** l'état physique du fluide est modifié.

5. Dispositif pour l'équilibrage de température d'une masse plastique dans un outil pour l'extrusion de tubes (2), comprenant un ou plusieurs canaux d'écoulement (13) avec au moins un orifice d'entrée pour la masse fondue (7) et un orifice de sortie pour la masse fondue (8),
au moins un élément d'équilibrage de température (11) étant arrangé dans le canal d'écoulement (13) entre l'orifice d'entrée pour la masse fondue (7) et l'orifice de sortie pour la masse fondue (8),
l'élément d'équilibrage de température (11) pouvant être contourné par la masse plastique,
la masse plastique qui coule autour de l'élément d'équilibrage de température (11) pouvant être tempéré au moyen dudit élément d'équilibrage de température (11),
le dégrée d'équilibrage de température pouvant être ajusté ou contrôlé au moyen de l'élément d'équilibrage de température (11),
**caractérisé en ce que**
l'élément d'équilibrage de température (11) présente un ou plusieurs orifices (12) à travers lesquels un fluide de refroidissement peut être transporté et
**que** la section transversale des orifices (12) dans l'élément d'équilibrage de température (11) peut être modifiée au moyen de la commande de machines du système à l'aide de moyens (14),
lesdits moyens (14) pour la modification de la section transversale des orifices (12) étant des éléments de blocage sous forme de petits curseurs qui peuvent être entrés ou sortis dans la section transversale des orifices (12).

6. Dispositif selon la revendication 5, **caractérisé en ce que** l'élément d'équilibrage de température (11) consiste de barres individuelles dont la température peut être ajustée ou contrôlée.

7. Dispositif selon la revendication 5, **caractérisé en ce que** l'orifice dans l'élément d'équilibrage de température (11) est revêtu d'un tube flexible dont la section transversale peut être modifiée de l'extérieur.
